# EUROPEAN PATENT SPECIFICATION

(11) **EP 1 446 588 B1**
(45) Date of publication and mention of the grant of the patent: **03.05.2006**
(21) Application number: 01989471.6
(22) Date of filing: 14.11.2001
(51) Int. Cl.: F16C 33/10, F16C 9/02

(54) **BEARING**
LAGER
PALIER

(43) Date of publication of application: 18.08.2004
(73) Proprietor: MAN B & W Diesel A/S, 2450 Copenhagen SV (DK)
(72) Inventor: BAU-MADSEN, Niels, Kristian, DK-2900 Hellerup (DK)
(74) Representative: van Walstijn, Bartholomeus G. G.
(86) International application number: PCT/EP2001/013194
(87) International publication number: WO 2003/042562

(56) References cited:
- US-A- 4 105 267
- US-A- 6 095 690

## Description

The present invention relates to main-, crank pin- or cross head bearings for a piston engine. The invention also relates to methods of producing shells for main-, crank pin-, or cross head bearings for a piston engine.

### BACKGROUND ART

Conventional bearings of this type are machined to have a circular cylindrical bearing surface e.g. by using a fine bore. These types of bearings comprise an upper shell and a lower shell defining a bearing surface for supporting a corresponding bearing journal. The hydrodynamic effects of the rotational movement of the journal create a pressure to be build up in the oil film between the bearing surface and the journal with a pressure that lifts the journal from the bearing surface. It is well known, however, that the journals of a crankshaft of a piston engine in operation cannot maintain a perfect alignment with the bearing axis of the main-, crank pin-, or cross head bearings. Bending and torsion of the crankshaft cause a misalignment between the journal axis and the bearing axis that varies during each engine cycle. The misalignment can lead to high edge pressures causing fatigue cracks in the bearing material. High edge pressures are also related with low oil film thickness. Another problem with high pressures in the oil film that is common in these types of bearings is not related to misalignment, but relates to the profile of the oil film pressure in a direction along the main bearing axis.

Modified bearing surfaces of the bearing shells have been proposed to reduce high edge pressures caused by misalignment. DK-U-9600132 discloses one method of obtaining reduced edge pressures by machining at least the bearing surface close to the bearing edges to be contoured in a direction along the main axis of the bearing to give place for misalignment of the journal with respect to the bearing. Machining this kind of contour in the bearing surface of the shells is, however, relatively expensive and special equipment is required to produce the contoured shape in bearing surface quality.

Another method of obtaining reduced edge pressures presented in DK-U-9600132 is by removing shell material from the outer surface of the shell in the areas near the front and/or rear edge of the shell. These areas of the shell are thus less stiff because they are not supported by the bearing housing and are supposed to deform dynamically by the pressure applied by the misaligned journal. It has been shown however; that under certain circumstances the edge pressures are high, but act only on a very small area, so that the force exerted (the product of the pressure and the area) on the edge area is insufficient to deform the shell. In this situation, the resulting edge pressure will be too high and that the bearing is likely to be damaged before the end of its expected lifetime. Even if the force exerted on the edge area is large enough to deform the shell, the dynamic deformation of the edge area with each engine cycle can lead to fatigue in the shell material.

### DISCLOSURE OF THE INVENTION

On this background, it is an object of the present invention to provide a shell, which overcomes the above-mentioned problem. This object is achieved in accordance with claim 1 by creating at least one weakened area in the shell, which under the tangential load caused by tightening the bearing housing head causes a deformation of the shell.

It is another object of the present invention to provide a bearing of the kind referred to initially, which overcomes the above-mentioned problem. This object is achieved in accordance with claim 2 by creating at least one weakened area in the shell, which under the tangential load caused by tightening the bearing housing head causes a. deformation of the shell.

The deformation creates an indentation in the bearing surface of the shell. The indentation reduces locally the oil film pressure and/or increases the oil film thickness.

The area with reduced wall thickness is according to a preferred embodiment formed by removing shell material from the outer surface of the shell. Advantageously, a recess is created in the outer surface of the shell. The area with reduced wall thickness is located according to a preferred embodiment in those areas where high oil film pressures tend to occur with misalignment of the bearing shaft of journal, namely, at the front and/or rear edge of said shell. According to another preferred embodiment, the bearing may further be provided with an area with reduced wall thickness located in a central part of said shell for reducing peak oil film pressures in these areas. For facilitating the production of said recesses with a miller cutter, the recesses are preferably oval or elliptical shaped. Alternatively, the shape of the recesses can be trapezoid with rounded corners.

The area with reduced wall thickness is according to a preferred embodiment formed by removing shell material from the outer surface of the shell. Advantageously, a recess is created in the outer surface of the shell. The area with reduced wall thickness is, according to a preferred embodiment located in those areas where high oil film pressures tend to occur with misalignment of the bearing shaft of journal, namely, at the front and/or rear edge of said shell. According to another preferred embodiment, the bearing may further be provided with an area with reduced wall thickness which is located in a central part of said shell for reducing peak oil film pressures in these areas. For facilitating the production of said recesses with a miller, cutter, or grinder the recesses are preferably trapezoid, oval or elliptical shaped.

Further objects, features, advantages and properties of the bearing, shell and production methods according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which
Figure 1 is a diagrammatic view on a bearing,
Figure 2a shows a rolled out graph of the oil film pressure and distribution as determined by using a finite element method,
Figure 2b shows a graph of the oil film thickness as determined by using a finite element method,
Figure 2c shows the oil film pressure distribution along the main axis of the bearing when the bearing is aligned,
Figure 3a is an elevated diagrammatic view on a shell with locally reduced wall thickness,
Figure 3b is a view from another angle of the shell shown in Fig. 3a
Figure 4 shows the shells of Figs. 3a and 3b mounted in the bearing with a detailed cutout view on the deformation,
Figure 5 shows a shell according to a further embodiment, and
Figure 6 shows the shells of Fig. 5 mounted in a bearing.

### DETAILED DESCRIPTION

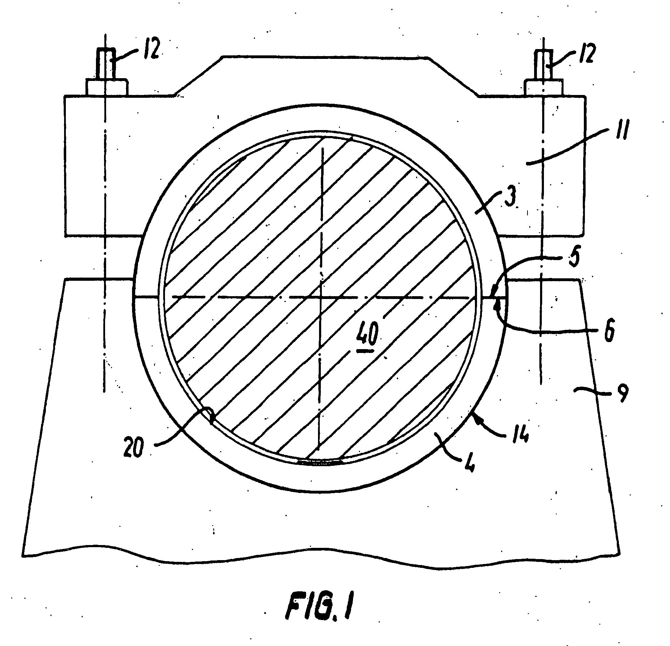

In the following detailed description, the invention will be described by the preferred embodiments. With reference to Fig. 1, the bearing 1 is of the type that is suitable for use as a main-, crank pin- or cross head bearing of a piston engine such as an otto-or diesel engine. The bearing is particularly suited for medium speed four-stroke diesel engines or slow speed two-stroke diesel engines that can be used as prime mover in ships or in stationary power plants such as cross head uniflow scavenged diesel engines, which in the large versions have an output per cylinder in the range of 350 to 6700 kW.

The bearing comprises an upper and a lower shell. The terms "upper" and "lower" as used here are, however, not intended to limit the use of fhe shells to a certain position with respect to the gravitational field, but are merely used to give a distinct name to each of the shells.

The largely circular cylindrical bearing surface 20 of the bearing is formed by the inner surfaces of two shells 3,4 abutting each other at two partition faces 5,6. The shells 3,4 are made of steel supporting material, on the inner side of which bearing metal has been deposited. In the drawing, the transition between the carrying material and the bearing material is not shown, but it should be understood that the two bearing materials cohere like one unit. If a tin-aluminum alloy is used as a bearing material, it may be deposited by rolling, and if the bearing material is white metal or lead-bronze, it may be cast onto the carrying material by centrifugal casting. The shells 3,4 have a front edge 17 and a rear edge 18.

In this embodiment, the shells 3,4 are of the so-called "thick" type, which means a bearing where the thickness of the shell is more than 4.5 percent of the diameter of the shaft 40 to be supported by the bearing 1. The shells 3,4 in the thick shell bearing is sufficiently thick and thus, rigid to support the bearing surface 20 against the occurring dynamic influences, also even though the shells 3,4 project beyond the bearing housing or the shells 3,4 and are not supported by the bearing housing along their entire circumference of their outer surface 14.

A lower bearing housing part 9 is shaped directly in the engine bedplate (not shown) and the lower shell 4 is placed directly in the bearing boring of the bedplate. An upper bearing housing part 11 is tightened towards the bedplate (not shown) by means of bearing studs 12, which may be bolts or threaded rods with nuts. The lower ends of the bearing studs 12 are screwed onto the upward threaded holes in the bedplate, and the bearing studs produce a holding force sufficiently large to pre-stress the shells 3,4 to the desired level. The radial pressure is provided by tightening the upper bearing housing part 11 towards the bedplate (not shown) by means of the bearing studs 12 so that the upper shell 3 is pressed down towards the lower shell 4 via the associated partition faces 5,6 creating a tangential load on the shells 3,4.

A journal or shaft 40 rotates in the mainly circular cylindrical space formed by the two shells 3,4. An oil film between the bearing surface 20 and the journal surface carries the journal 40 and prevents substantially any direct contact between the journal surface and the inside surface of the shells 3,4 and provides lubrication.

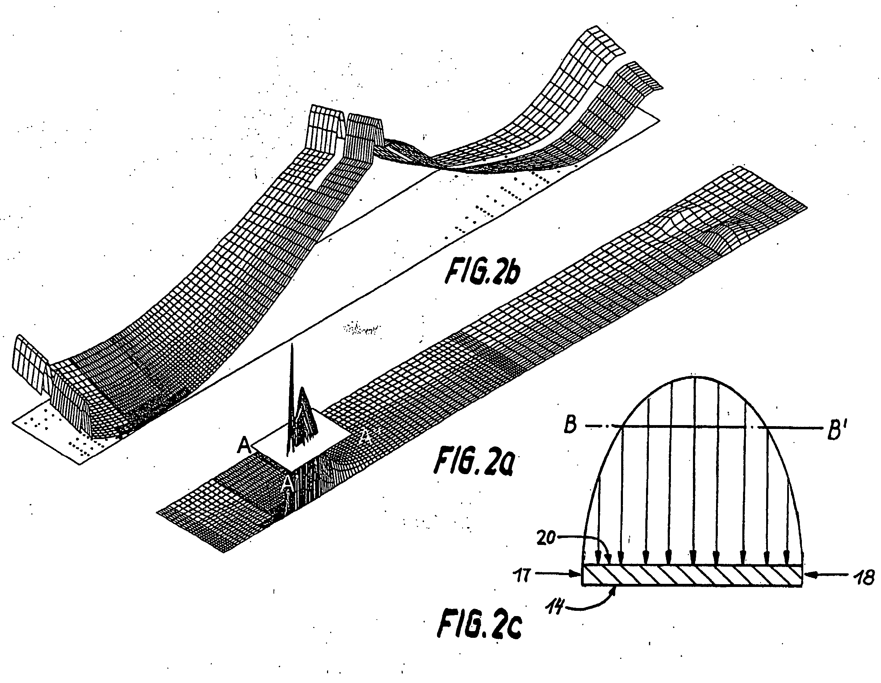

Fig. 2a is a graph showing the magnitude and distribution of the oil film pressure as calculated with a finite element method for a shell 3,4 with a circular cylindrical bearing surface 20. Alternatively, any other suitable numerical method may be used. In Fig. 2a, the circular bearing surface has been rolled out to form a flat surface for illustration purposes only. For the calculations with the so-called finite element method, the bearing load has been chosen to correspond to the maximum load condition of the running engine. The bending and torsion of the crankshaft and the resulting misalignment of the journal has been taken into account in the calculation of the oil film pressure. On the graph of Fig. 2a, it is possible to identify areas in which the pressure in the oil film pressure exceeds a maximum value. This maximum value is illustrated by the plane A-A'-A".

Fig. 2b is a graph showing the oil film thickness determined in a manner analogous to the determination of the oil film pressure. From the graph the areas with little oil film thickness can easily be recognized. Both the oil film thickness and the oil film pressure can be used as a criterion for determining in which areas of the bearing indentations in the bearing surface 20 could improve the bearing performance.

Pressures in the oil film are also often too high in the middle of the bearing. The pressure profile from the one edge to the other in a direction along in the main bearing axis usually has a shape as shown in Fig. 2c. The oil film pressure has its peak in the middle of the bearing. In order to increase the overall bearing capacity, it can therefore be desirable to reduce the peak pressure in the most highly loaded areas in the middle of the bearing to thereby distribute the pressure in the oil film more evenly over the bearing surface. By using e.g. the finite element method, it can be determined in which areas of the bearing surface the oil film pressure exceeds a preset maximum threshold value as illustrated by the dotted line B-B'.

By using the same finite element method the oil film thickness can be determined and displayed in a graph (not shown) or other visual medium and compared with a minimum value for the oil film thickness that is e.g. required for sufficient lubrication. The first calculation with the finite element method will usually start with a geometry for the bearing surface corresponding largely to a right circular cylinder. The bearing surface geometry can be modified for further calculations with the finite element method to determine the effect of bearing surface geometry modifications e.g. indentations in the area or areas that were identified as having an oil film pressure exceeding the maximum value. The indentations depth, shape and location may be repeatedly adjusted after each recalculation of the oil film pressure to optimize the bearing properties.

When the correct shape, depth, and location of the indentation(s) in the bearing surface 20 is established, the indentation(s) can be created in accordance with one of the preferred embodiments.

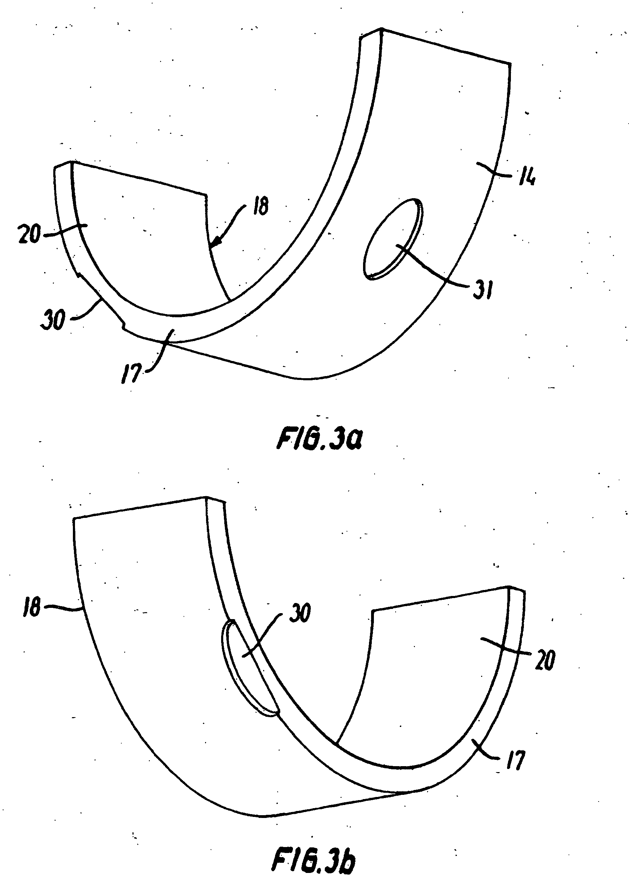

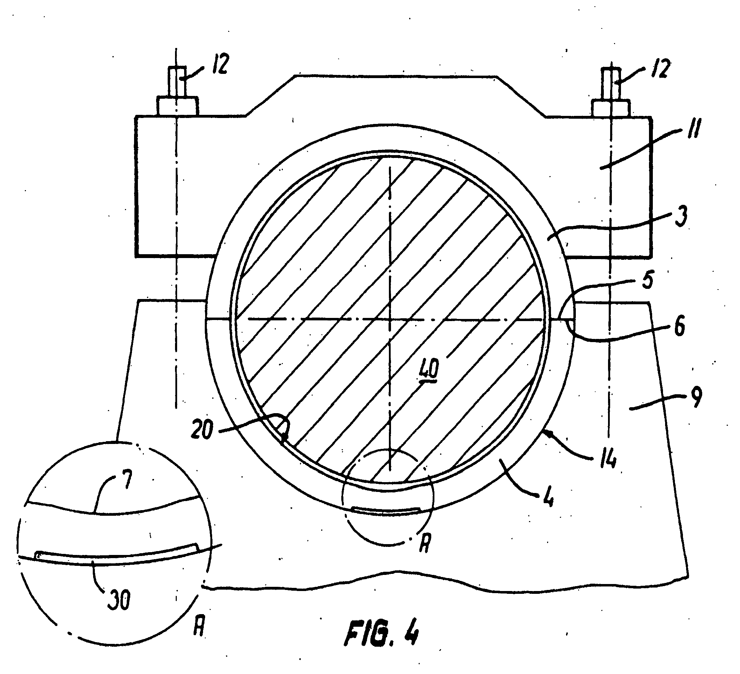

According to first preferred embodiment shell material is removed from the outer surface of the shell as shown in Figs. 3a and 3b. A half-elliptical shaped cavity 30 is created in the outer surface 14 of the shell 3,4 by using a miller, cutter or grinder. The cavity 30 opens to the front edge 17 of the shell 3,4. Further, an elliptical cavity 31 is created in a central part of the outer surface 14 of the shell by using a miller, cutter or grinder. The cavities 30,31 in the outer surface 14 of the shell 3,4 reduce the wall thickness of the shell thereby weakening it locally. The tangential load on the shell 3,4 created by tightening the upper housing part 11 towards the bedplate (not shown) causes the shell 3,4 to deform as shown in Fig. 4 (the magnitude of the deformations has been strongly exaggerated in this figure for illustrative purposes). Smoothly shaped indentations are formed in the bearing surface 20. The bottom of the cavities 30,31 does not come into contact with the housing. The oil film pressure peaks in a bearing 1 with the indentations in the bearing surface 20 are reduced. Lower maximum pressures in the oil film increase the durability and/or load capacity of the bearing.

The recesses 30 or 31 do not have to be elliptical, any shape that results in the desired deformation and thus the correct indentation is suitable. Oval or trapezoid shapes (with rounded-off corners) can be used. The recesses 30,31 may stretch out over a small portion of the circumference or over the complete circumference of the shell. The recesses 30,31 may stretch out over a small portion of the width or over the complete width of said shell. The method of forming the indentations according to the above embodiment of the invention is found to be particularly suitable for so-called thick shells. The recess may have a depth of 0.01% to 14% of the shell thickness, preferably 0.05% to 10% of the shell thickness.

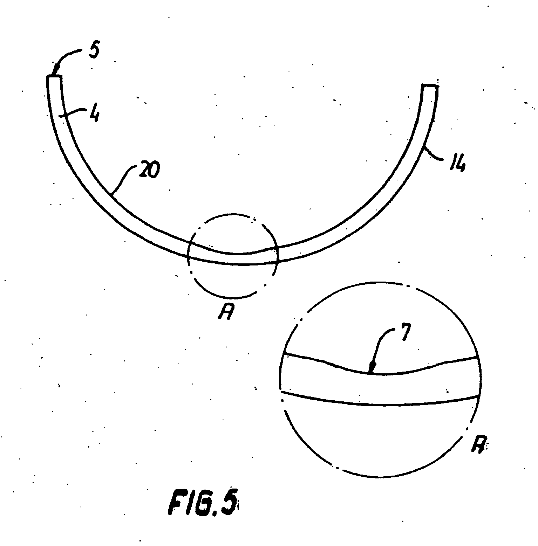

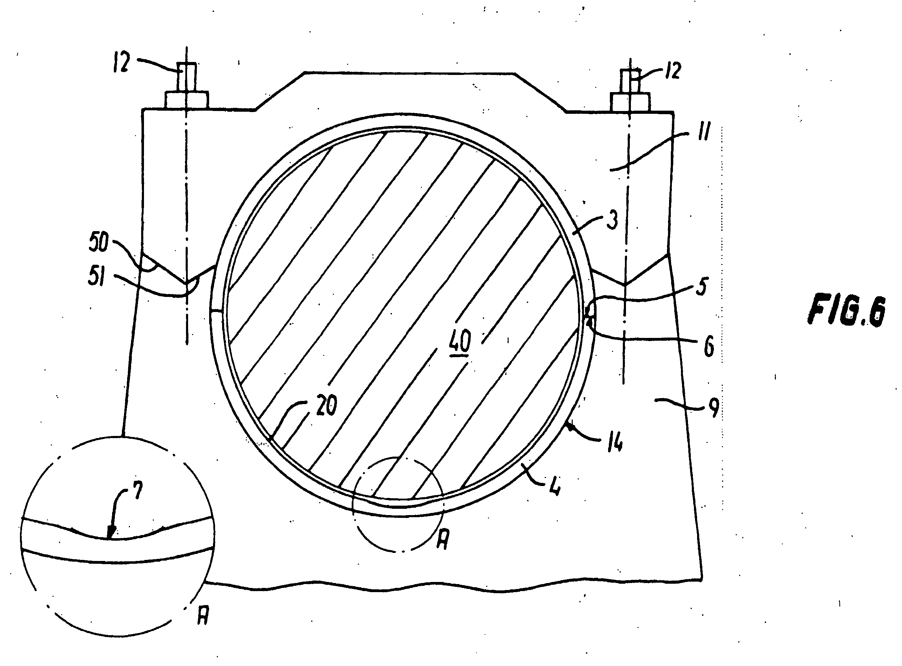

According to another embodiment of the invention (cf. Figs. 5,6), the shells are of the so-called "thin shell" type. A thin shell bearing usually means a bearing in which thickness of the shell 3,4 is from 1.5 to 3 percent of the diameter of the shaft 40 to be supported by the bearing. The conventional characteristics of the thin-shell bearing are that the shell 3,4 has to be supported by the bearing housing over the full extend of the shell 3,4, as the thickness of the shell 3,4 itself is not sufficient for the shell 3,4 to support the bearing metal and thus, the bearing surface 20 against the dynamic influences occurring during operation of the engine. The upper bearing housing part 11 is positioned during tightening by wedging it into precisely machined inclined surfaces 50,51 on the engine bedplate (not shown). The upper housing part 11 is tightened toward the bedplate (not shown) by means of bearing studs 12, which may be bolts or threaded rods with nuts. The lower ends of the bearing studs are screwed into upward threaded holes in the bedplate, and the bearing studs produce a holding force which is sufficiently large to pre-stress the shells 3,4 to the desired level.

The areas of the bearing surface 20 of the thin shells 3,4 in which the oil film is too thin and/or in which the pressure in the oil film is too high are calculated in the same way as explained above for the embodiment with the thick shells.

The indentations in the thin shells 3,4 are manufactured by removing material from either the front side to form an indentation 7 or from the rear side of the bearing as described above for the thick shells, i.e. the same technique for creating the indentations can be used for both thick and thin type shells.

## Claims

1. Shell for mounting under a tangential load in a bearing housing of a main-, crank pin- or cross head bearing for a piston engine, said shell (4) defining a bearing surface (20) and having one or more areas (30,31) with a sufficiently reduced wall thickness to cause a local deformation by said tangential load and the local deformation of said shell resulting in an indentation (7) in said bearing surface

2. Main-, crank pin- or cross head bearing (1) for a piston engine comprising an upper shell (3) and a lower shell (4) defining a bearing surface (20) for supporting a corresponding bearing journal, said upper and lower shell (3,4) being mounted under tangential load in a bearing housing (9,11) whereby at least one of said shells (4) has one or more areas (30, 31) with a reduced wall thickness, weakening said respective shell to cause local deformation (7) of said respective shell by said tangential load.

3. Main-, crank pin- or cross head bearing according to claim 2, wherein said deformation results in an indentation (7) in said bearing surface (20).

4. Shell according to claim 1 or main-, crank pin- or cross head bearing according to claim 3, wherein said area (30,31) with reduced wall thickness is formed by removing shell material from the outer surface (14) of said shell (4).

5. Shell according to claim 1 or main-, crank pin- or cross head according to claim 4, wherein the removal of shell material from the outer surface of said shell (4) weakens the shell locally so that said indention (7) is formed in the bearing surface (20) of said shell when a tangential pressure is applied to said shell (4) upon mounting of said shell in the bearing housing (9,11).

6. Shell according to claim 1 or main-, crank pin- or cross head according to claim 3, wherein said indentation (7) is formed by removing material from the bearing surface (20) of said shell (4).

7. Shell according to claim 1 or main-, crank pin- or cross head bearing according to any of claims 2 to 6, wherein said area with reduced wall thickness is formed by a recess (30, 31) with a depth of 0.01% to 14% of the shell thickness, preferably 0.05% to 10% of the shell thickness.

8. Shell according to claim 1 or main- crank pin- or cross head bearing according to any of claims 2 to 7, wherein said area (30,31) with reduced wall thickness is located at the front and/or rear edge (17,18) of said shell (4).

9. Shell according to claim 1 or main-, crank pin- or cross head bearing according to any of claims 2 to 8, wherein said (30,31) area with reduced wall thickness is located in a central part of said shell (4).

10. Shell according to claim 1 or main,-, crank pin- or cross head bearing according to any of claims 2 to 9, wherein said recess (30,31) is oval-, elliptical- or trapezoid shaped.

11. Shell according to claim 1 or main-, crank pin- or cross head bearing according to any of claims 2 to 10, wherein said recess (30,31) stretches out over a small portion of the circumference of the shell (4).

12. Shell according to claim 1 or main-, crank pin- or cross head bearing according to any of claims 2 to 10, wherein said recess stretches out over the complete circumference of the shell.

13. Shell according to claim 1 or main-, crank pin- or cross head bearing according to any of claims 2 to 12, wherein said recess (30,31) stretches out over a small portion of the width of said shell (4).

14. Shell according to claim 1 or main-, crank pin- or cross head bearing according to any of claims 2 to 12, wherein said recess stretches out over the complete width of said shell.

## Patentansprüche

1. Schale zur Montage unter einer tangentialen Last in einem Lagergehäuse eines Hauptlagers, Kurbelzapfenlagers oder Querhauptlagers für einen Kolbenmotor, wobei die Schale (4) eine Lagerfläche (20) definiert und einen oder mehrere Bereiche (30, 31) mit einer ausreichend reduzierten Wanddicke aufweist, um eine lokale Verformung durch die tangentiale Last zu bewirken, und wobei die lokale Verformung der Schale eine Vertiefung (7) in der Lagerfläche zur Folge hat.

2. Hauptlager, Kurbelzapfenlager oder Querhauptlager für einen Kolbenmotor mit einer oberen Schale (3) und einer unteren Schale (4), die eine Lagerfläche (20) definieren, um einen entsprechenden Lagerzapfen abzustützen, wobei die obere und untere Schale (3, 4) unter einer tangentialen Last in einem Lagergehäuse (9, 11) montiert sind, wobei zumindest eine der Schalen (4) einen oder mehrere Bereiche (30, 31) mit einer reduzierten Wanddicke aufweist, was die jeweilige Schale schwächt, um eine lokale Verformung (7) der jeweiligen Schale unter der tangentialen Last zu bewirken.

3. Hauptlager, Kurbelzapfenlager oder Querhauptlager nach Anspruch 2, wobei die Verformung eine Vertiefung (7) in der Lagerfläche (20) zur Folge hat.

4. Schale nach Anspruch 1 oder Hauptlager, Kurbelzapfenlager oder Querhauptlager nach Anspruch 3, wobei der Bereich (30, 31) mit einer reduzierten Wanddicke gebildet wird, indem von der Außenfläche (14) der Schale (4) Schalenmaterial entfernt wird.

5. Schale nach Anspruch 1 oder Hauptlager, Kurbelzapfenlager oder Querhauptlager nach Anspruch 4, wobei die Entfernung von Schalenmaterial von der Außenfläche der Schale (4) die Schale so lokal schwächt, dass die Vertiefung (7) in der Lagerfläche (20) der Schale gebildet wird, wenn beim Montieren der Schale im Lagergehäuse (9, 11) ein tangentialer Druck angewendet wird.

6. Schale nach Anspruch 1 oder Hauptlager, Kurbelzapfenlager oder Querhauptlager nach Anspruch 3, wobei die Vertiefung (7) gebildet wird, indem von der Lagerfläche (20) der Schale (4) Material entfernt wird.

7. Schale nach Anspruch 1 oder Hauptlager, Kurbelzapfenlager oder Querhauptlager nach einem der Ansprüche 2 bis 6, wobei der Bereich mit reduzierter Wanddicke durch eine Ausnehmung (30, 31) mit einer Tiefe von 0,01% bis 14% der Schalendicke, vorzugsweise 0,05% bis 10 % der Schalendicke, gebildet wird.

8. Schale nach Anspruch 1 oder Hauptlager, Kurbelzapfenlager oder Querhauptlager nach einem der Ansprüche 2 bis 7, wobei der Bereich (30, 31) mit reduzierter Wanddicke am vorderen und/oder hinteren Rand (17, 18) der Schale (4) liegt.

9. Schale nach Anspruch 1 oder Hauptlager, Kurbelzapfenlager oder Querhauptlager nach einem der Ansprüche 2 bis 8, wobei der Bereich (30, 31) mit reduzierter Wanddicke in einem zentralen Teil der Schale (4) liegt.

10. Schale nach Anspruch 1 oder Hauptlager, Kurbelzapfenlager oder Querhauptlager nach einem der Ansprüche 2 bis 9, wobei die Ausnehmung (30, 31) oval-, ellipsen- oder trapezförmig ist.

11. Schale nach Anspruch 1 oder Hauptlager, Kurbelzapfenlager oder Querhauptlager nach einem der Ansprüche 2 bis 10, wobei die Ausnehmung (30, 31) sich über einen kleinen Abschnitt des Umfangs der Schale (4) ausdehnt.

12. Schale nach Anspruch 1 oder Hauptlager, Kurbelzapfenlager oder Querhauptlager nach einem der Ansprüche 2 bis 10, wobei die Ausnehmung sich über den kompletten Umfang der Schale ausdehnt.

13. Schale nach Anspruch 1 oder Hauptlager, Kurbelzapfenlager oder Querhauptlager nach einem der Ansprüche 2 bis 12, wobei die Ausnehmung (30, 31) sich über einen kleinen Abschnitt der Breite der Schale (4) ausdehnt.

14. Schale nach Anspruch 1 oder Hauptlager, Kurbelzapfenlager oder Querhauptlager nach einem der Ansprüche 2 bis 12, wobei die Ausnehmung sich über die komplette Breite der Schale ausdehnt.

## Revendications

1. Coussinet destiné à être installé sous une charge tangentielle dans un logement de palier d'un palier principal, de vilebrequin ou de bossage de piston pour un moteur à piston, ledit coussinet (4) définissant une surface de palier (20) et comportant une ou plusieurs zones (30, 31) ayant une épaisseur de paroi suffisamment réduite pour créer une déformation locale par ladite charge tangentielle et la déformation locale dudit coussinet résultant en une entaille (7) dans ladite surface de palier.

2. Palier principal, de vilebrequin ou de bossage de piston (1) pour un moteur à piston, comprenant un coussinet supérieur (3) et un coussinet inférieur (4) définissant une surface de palier (20) destinée à supporter un tourillon de palier correspondant, lesdits coussinets supérieur et inférieur (3, 4) étant installés sous une charge tangentielle dans un logement de palier (9, 11), grâce à quoi au moins l'un desdits coussinets (4) comporte une ou plusieurs zones (30, 31) ayant une épaisseur de paroi réduite, en affaiblissant ledit coussinet respectif pour provoquer une déformation locale (7) dudit coussinet respectif par ladite charge tangentielle.

3. Palier principal, de vilebrequin ou de bossage de piston selon la revendication 2, dans lequel, ladite déformation résulte en une entaille (7) dans ladite surface de palier (20).

4. Coussinet selon la revendication 1 ou palier principal, de vilebrequin ou de bossage de piston selon la revendication 3, où ladite zone (30, 31) comportant une épaisseur de paroi réduite est formée en retirant le matériau de coussinet de la surface extérieure (14) dudit coussinet (4).

5. Coussinet selon la revendication 1 ou palier principal, de vilebrequin ou de bossage de piston selon la revendication 4, où le retrait du matériau de coussinet de la surface extérieure dudit coussinet (4) affaiblit le coussinet localement de sorte que ladite entaille (7) est formée dans la surface de palier (20) dudit coussinet lorsqu'une pression tangentielle est appliquée audit coussinet (4) lors du montage dudit coussinet dans le logement de palier (9, 11).

6. Coussinet selon la revendication 1 ou palier principal, de vilebrequin ou de bossage de piston selon la revendication 3, où ladite entaille (7) est formée en retirant le matériau de la surface de palier (20) dudit coussinet (4).

7. Coussinet selon la revendication 1 ou palier principal, de vilebrequin ou de bossage de piston selon l'une quelconque des revendications 2 à 6, où ladite zone comportant une épaisseur de paroi réduite est formée par un évidement (30, 31) ayant une profondeur de 0,01 % à 14 % de l'épaisseur du coussinet, de préférence 0,05 % à 10 % de l'épaisseur du coussinet.

8. Coussinet selon la revendication 1 ou palier principal, de vilebrequin ou de bossage de piston selon l'une quelconque des revendications 2 à 7, où ladite zone (30, 31) présentant une épaisseur de paroi réduite est située au niveau du bord avant et/ou arrière (17, 18) dudit coussinet (4).

9. Coussinet selon la revendication 1 ou palier principal, de vilebrequin ou de bossage de piston selon l'une quelconque des revendications 2 à 8, où ladite zone (30, 31) comportant une épaisseur de paroi réduite est située dans une partie centrale dudit coussinet (4).

10. Coussinet selon la revendication 1 ou palier principal, de vilebrequin ou de bossage de piston selon l'une quelconque des revendications 2 à 9, où ledit évidement (30, 31) est de forme ovale, elliptique ou trapézoïdale.

11. Coussinet selon la revendication 1 ou palier principal, de vilebrequin ou de bossage de piston selon l'une quelconque des revendications 2 à 10, où ledit évidement (30, 31) s'étire sur une petite partie de la circonférence du coussinet (4).

12. Coussinet selon la revendication 1 ou palier principal, de vilebrequin ou de bossage de piston selon l'une quelconque des revendications 2 à 10, où ledit évidement s'étire sur la circonférence totale du coussinet.

13. Coussinet selon la revendication 1 ou palier principal, de vilebrequin ou de bossage de piston selon l'une quelconque des revendications 2 à 12, où ledit évidement (30, 31) s'étire sur une petite partie de la largeur dudit coussinet (4).

14. Coussinet selon la revendication 1 ou palier principal, de vilebrequin ou de bossage de piston selon l'une quelconque des revendications 2 à 12, où ledit évidement s'étire sur la largeur totale dudit coussinet.
